# EUROPÄISCHE PATENTSCHRIFT

(11) **EP 1 875 105 B1**
(45) Veröffentlichungstag und Bekanntmachung des Hinweises auf die Patenterteilung: **09.09.2009**
(21) Anmeldenummer: 06703878.6
(22) Anmeldetag: 01.02.2006
(51) Int. Cl.: F16H 7/12

(54) **ZUGMITTELTRIEB, INSBESONDERE RIEMENTRIEB FÜR NEBENAGGREGATE EINES VERBRENNUNGSMOTORS**
TRACTION MECHANISM DRIVE, ESPECIALLY BELT DRIVE FOR SECONDARY UNITS OF A COMBUSTION ENGINE
ENTRAINEMENT A ELEMENT DE TRACTION, NOTAMMENT ENTRAINEMENT A COURROIE POUR DES GROUPES AUXILIAIRES D'UN MOTEUR A COMBUSTION INTERNE

(30) Priorität: 13.04.2005 DE 102005017038
(43) Veröffentlichungstag der Anmeldung: 09.01.2008
(73) Patentinhaber: Schaeffler KG, 91074 Herzogenaurach (DE)
(72) Erfinder: BOGNER, Michael, 90542 Eckental (DE)
(86) Internationale Anmeldenummer: PCT/EP2006/000838
(87) Internationale Veröffentlichungsnummer: WO 2006/108461

(56) Entgegenhaltungen:
- DE-A1- 10 328 900
- DE-A1- 19 926 612
- PATENT ABSTRACTS OF JAPAN Bd. 2000, Nr. 20, 10. Juli 2001 (2001-07-10) & JP 2001 059555 A (DENSO CORP; BANDO CHEM IND LTD), 6. März 2001 (2001-03-06)

## Beschreibung

### Gebiet der Erfindung

Die Erfindung betrifft einen Zugmitteltrieb für Nebenaggregate eines Verbrennungsmotors, insbesondere nach dem Oberbegriff des Patentanspruchs 1.

### Hintergrund der Erfindung

In der japanischen Offenlegungsschrift 2001 059 555 A ist ein Zugmitteltrieb, insbesondere ein Riementrieb für Nebenaggregate eines Verbrennungsmotors offenbart, mit einer Riemenscheibe der Kurbelwelle und einer Riemenscheibe eines Startergenerators sowie mit einem ersten Spannsystem, das einen ersten Spannerhebelarm und eine erste Spannerrolle aufweist sowie mit einem zweiten Spannsystem, das einen zweiten Spannerhebelarm und eine zweite Spannerrolle aufweist, wobei die erste Spannerrolle direkt hinter der Riemenscheibe des Startergenerators mit einem starterbedingten Leertrum über eine geringe Umschlingung in Druckkontakt steht und die zweite Spannerrolle direkt hinter der Riemenscheibe der Kurbelwelle mit einem antriebsbedingten Leertrum über eine ca. 180° Umschlingung in Druckkontakt steht und dass das antriebsbedingte Leertrum im Startbetrieb als Zugtrum arbeitet und dass eine durch diesen Trumwechsel bedingte Lageänderung der zweiten Spannerrolle begrenzt ist. Auf welche Weise diese Begrenzung erfolgt, geht aus obiger Schrift nicht hervor.

### Aufgabe der Erfindung

Der Erfindung liegt die Aufgabe zugrunde einen Riementrieb gemäß dem Oberbegriff des Patentanspruchs 1 zu schaffen, der ein Mittel zum Begrenzen der Lageänderung der zweiten Spannerrolle im Startbetrieb aufweist.

### Zusammenfassung der Erfindung

Die Aufgabe wird gelöst durch die Merkmale des unabhängigen Patentanspruchs 1.

Durch geschickte Anordnung des zweiten Spannsystems wird erreicht, dass sich die zweite Spannerrolle im starterbedingten Zugtrum unter der resultierenden Kraft der beiden starterbedingten Zugtrumäste nur so weit aus dem Riementrieb heraus bewegt, bis der zweite Spannerhebelarm sich in einer Art "Totpunktlage" nahezu parallel zur resultierenden Kraft der beiden starterbedingten Zugtrumäste befindet. Dadurch geht der wirksame Teil des zweiten Spannerhebelarms gegen Null, so dass die zweite Spannerrolle sich in einer nahezu fixierten Position befindet.

Da das zweite Spannsystem in dieser "Totpunktlage" des zweiten Spannerhebelarms eine hohe Belastung erfährt, ist es von Vorteil, dass das zweite Spannsystem zumindest teilweise nach dem hochfesten Aluminiumsqueeze- oder Rheo-Gießverfahren oder aus Stahlfeinguss hergestellt ist.

Zur Erleichterung der Montage des Zugmitteltriebs ist es von Vorteil, dass zumindest eines der beiden Spannsysteme zur Montage vorgespannt und versplintet ist und dass zumindest das nicht versplintete Spannsystem eine entsprechende Werkzeugaufnahme aufweist, die zum Spannen desselben aus dem Riementrieb heraus dient.

Für die Lebensdauer des Riemens ist es wichtig, dass die beiden Spannsysteme eine getrennte Auslegung für den Starter- und den Generatorbetrieb aufweisen. Dadurch kann der weitaus größte Teil der Betriebszeit des Zugmitteltriebs mit der für den generatorischen Betrieb ausreichenden geringeren und dadurch schonenderen Vorspannung gefahren werden, während die erhöhte Vorspannung des Starterbetriebs nur kurzzeitig erforderlich ist.

### Kurze Beschreibung der Zeichnungen

Weitere Merkmale der Erfindung ergeben sich aus der folgenden Beschreibung und den Zeichnungen, in denen ein Ausführungsbeispiel der Erfindung schematisch dargestellt ist.

Dabei zeigen:
- Figur 1: eine Ansicht des erfindungsgemäßen Riementriebs im Generatorbetrieb;
- Figur 2: eine Ansicht gemäß Figur 1, jedoch im Startbetrieb

### Ausführliche Beschreibung der Zeichnungen

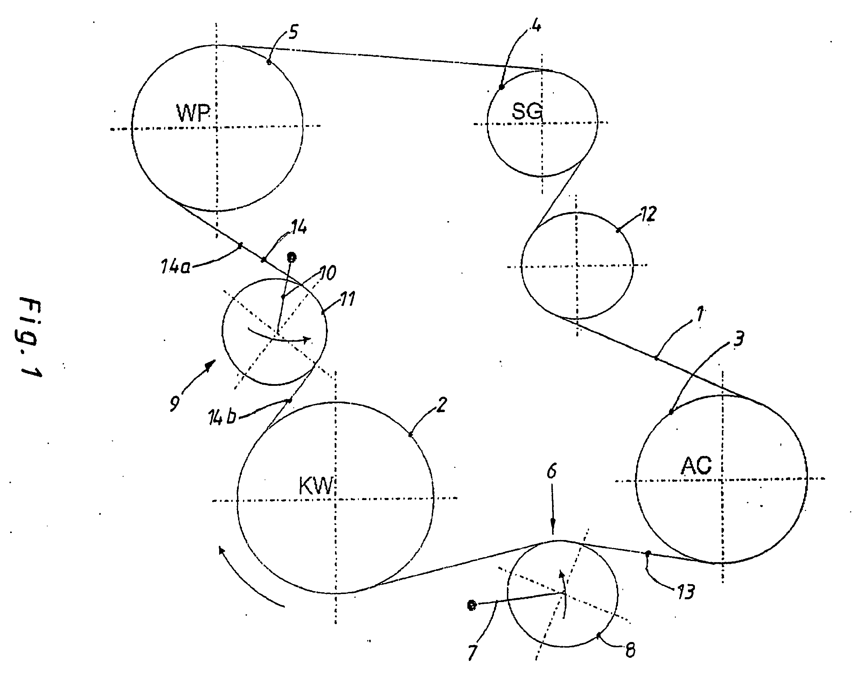

Figur 1 zeigt die Ansicht eines Riementriebs, der zum Antrieb von Nebenaggregaten eines nicht dargestellten Verbrennungsmotors dient.

Der Riementrieb besitzt einen Riemen 1, der die Riemenscheiben der Nebenaggregate und der Riemenscheibe 2 der Kurbelwelle KW Zugkraft- und damit Drehmoment übertragend verbindet.

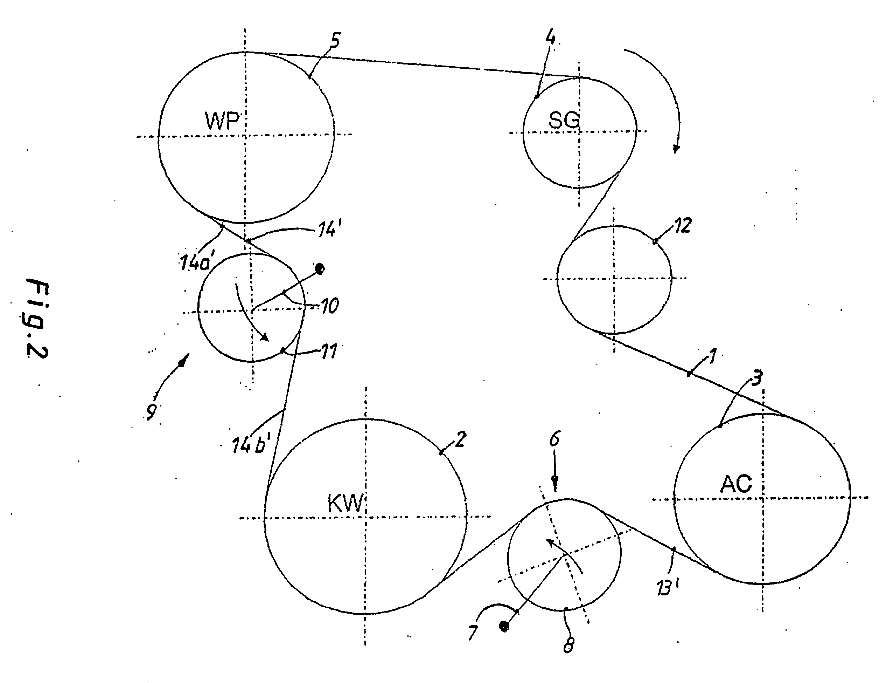

Wie in den Figuren 1 und 2 dargestellt, werden von der Riemenscheibe 2 der Kurbelwelle im generatorischen Betrieb folgende Riemenscheiben angetrieben:
Riemenscheibe 3 eines Klimakompressors AC,
Riemenscheibe 4 eines Startergenerators SG und
Riemenscheibe 5 eine Wasserpumpe WP.

Außerdem sind im Riementrieb ein erstes Spannsystem 6 mit einem ersten Spannerhebelarm 7 und einer ersten Spannerrolle 8 sowie ein zweites Spannsystem 9 mit einem zweiten Spannerhebelarm 10 und einer zweiten Spannerrolle 11 angeordnet. Hinzu kommt noch eine Umlenkrolle 12.

Die erste Spannerrolle 8 ist im Riementrieb direkt hinter der Riemenscheibe 3 des Klimakompressors AC im Leertrum während des Startbetriebs, die zweite Spannerrolle 11 direkt hinter der Riemenscheibe 2 der Kurbelwelle KW angeordnet.

Figur 1 zeigt den Riementrieb im generatorischen Betrieb. Hierbei wird der Riemen 1 von der Riemenscheibe 2 der Kurbelwelle KW angetrieben. Die erste Spannerrolle 8 befindet sich in Druckkontakt mit einem antriebsbedingten Zugtrum 13, während sich die zweite Spannerrolle 11 in Druckkontakt mit einem antriebsbedingten Leertrum 14 befindet.

Die Umschlingung der ersten Spannerrolle 8 durch das antriebsbedingte Zugtrum 13 ist gering, die Umschlingung der zweiten Spannerrolle 11 durch das antriebsbedingte Leertrum 14 liegt bei ca. 90°. Der Winkel zwischen der resultierenden Zugkraft der beiden antriebsbedingten Leertrumäste 14a, 14b und dem zweiten Spannerhebelarm 10 beträgt ca. 80°.

Figur 2 zeigt den Riementrieb von Figur 1 im Startbetrieb. Durch den Wechsel vom generatorischen Betrieb zum Startbetrieb werden aus den antriebsbedingten Leertrumästen 14a, 14b (Figur 1) starterbedingte Zugtrumäste 14a', 14b' (Figur 2). Deren erhöhte resultierende Zugkraft führt zum Schwenken des zweiten Spannerhebelarms 10 in eine "Totpunktlage" nahezu parallel zur resultierenden Zugkraft der Zugtrumäste 14a', 14b'. Dadurch wird die zweite Spannerrolle 11 quasi lagefixiert und verhindert so eine weitere Entspannung des Riemens 1. Dessen für den Startbetrieb erforderliche Riemenspannung wird allein durch das entsprechend ausgelegte erste Spannsystem 6 bestimmt. Die übrige Bezifferung von Figur 2 entspricht der von Figur 1.

### Bezugszeichen

- 1: Riemen
- 2: Riemenscheibe der Kurbelwelle KW
- 3: Riemenscheibe eines Klimakompressors AC
- 4: Riemenscheibe eines Startergenerators SG
- 5: Riemenscheibe einer Wasserpumpe WP
- 6: erstes Spannsystem
- 7: erster Spannerhebelarm
- 8: erste Spannerrolle
- 9: zweites Spannsystem
- 10: zweiter Spannerhebelarm
- 11: zweite Spannerrolle
- 12: Umlenkrolle
- 13: antriebsbedingtes Zugtrum (generatorischer Betrieb)
- 13': starterbedingtes Leertrum (Starterbetrieb)
- 14: antriebsbedingtes Leertrum (generatorischer Betrieb)
- 14': starterbedingtes Zugtrum (Starterbetrieb)
- 14a: antriebsbedingter Leertrumast (generatorischer Betrieb)
- 14a': starterbedingter Zugtrumast (Starterbetrieb)
- 14b: antriebsbedingter Leertrumast (generatorischer Betrieb)
- 14b': starterbedingter Zugtrumast (Starterbetrieb)

## Patentansprüche

1. Zugmitteltrieb, insbesondere Riementrieb für Nebenaggregate eines Verbrennungsmotors, mit einer Riemenscheibe (2) der Kurbelwelle KW und einer Riemenscheibe (4) eines Startergenerators SG sowie mit einem ersten Spannsystem (6), das einen ersten Spannerhebelarm (7) und eine erste Spannerrolle (8) aufweist sowie mit einem zweiten Spannsystem (9), das einen zweiten Spannerhebelarm (10) und eine zweite Spannerrolle (11) aufweist, wobei die Spannerhebelarme (7,10) der beiden Spannsysteme (6,9) über getrennt voneinander positionierten Drehachsen schwenkbar sind und die erste Spannerrolle (8) direkt hinter der Riemenscheibe (3) des Klimakompressors AC mit einem starterbedingten Leertrum (13') über eine geringe Umschlingung in Druckkontakt steht und die zweite Spannerrolle (11) direkt hinter der Riemenscheibe (2) der Kurbelwelle KW mit einem antriebsbedingten Leertrum (14) über eine ca. 90° Umschlingung in Druckkontakt steht und dass das antriebsbedingte Leertrum (14) im Startbetrieb als Zugtrum (14') arbeitet und dass eine durch diesen Trumwechsel bedingte Lageänderung der zweiten Spannerrolle (11) begrenzt ist, **dadurch gekennzeichnet, dass** das zweite Spannsystem (9) in einer solchen Weise angeordnet ist, dass sich die zweite Spannerrolle (11) im starterbedingten Zugtrum (14') unter der resultierenden Kraft der beiden starterbedingten Zugtrumäste (14a', 14b') nur so weit aus dem Riementrieb heraus bewegbar ist, bis der zweite Spannerhebelarm (10) sich in einer Art Totpunktlage nahezu parallel zur resultierenden Kraft der beiden starterbedingten Zugtrumäste (14a'), (14b') befindet und die Spannsysteme (6,9) eine getrennte Auslegung für den Starterbetrieb und den Generatorbetrieb aufweisen, wobei das für den generatorischen Betrieb bestimmte Spannsystem mit einer geringeren Vorspannung gefahren wird als das für den Starterbetrieb bestimmte Spannsystem.

2. Zugmitteltrieb nach Anspruch 1, **dadurch gekennzeichnet, dass** das zweite Spannsystem (9) zumindest teilweise nach dem Aluminiumsqueeze- oder Rheo-Gießverfahren oder aus Stahlfeinguss hergestellt ist.

3. Zugmitteltrieb nach Anspruch 2, **dadurch gekennzeichnet, dass** zumindest eines der beiden Spannsysteme (6) oder (9) zur Montage vorgespannt und versplintet ist und dass zumindest das nicht versplintete Spannsystem (6) oder (9) eine entsprechende Werkzeugaufnahme aufweist, die zum Spannen desselben aus dem Riementrieb heraus dient.

4. Zugmitteltrieb nach Anspruch 3, **dadurch gekennzeichnet, dass** die beiden Spannsysteme (6), (9) für den generatorischen und den Startbetrieb eine getrennte, auf den jeweiligen Betriebszustand abgestimmte Auslegung aufweisen.

## Claims

1. Traction drive, in particular belt drive for secondary assemblies of an internal combustion engine, with a belt pulley (2) of the crankshaft KW and with a belt pulley (4) of a starter generator SG and also with a first tension system (6) which has a first tensioner lever arm (7) and a first tensioner roller (8), and with a second tension system (9) which has a second tensioner lever arm (10) and a second tensioner roller (11), the tensioner lever arms (7, 10) of the two tension systems (6, 9) being pivotable via axes of rotation positioned separately from one another, and the first tensioner roller (8) being in pressure contact, directly behind the belt pulley (3) of the air-conditioning compressor AC, with a starter-induced idling strand (13') via a low looping, and the second tensioner roller (11) being in pressure contact, directly behind the belt pulley (2) of the crankshaft KW, with a drive-induced idling strand (14) via a looping of approximately 90°, and the drive-induced idling strand (14) operating as a traction strand (14') during starting operation, and a change in position of the second tensioner roller (11) caused by this strand change being limited, **characterized in that** the second tension system (9) is arranged in such a way that the second tensioner roller (11) in the starter-induced traction strand (14') is moveable, under the resultant force of the two starter-induced traction-strand branches (14a', 14b'), out of the belt drive only to an extent until the second tensioner lever arm (10) is in a type of dead centre position virtually parallel to the resultant force of the two starter-induced traction-strand branches (14a'), (14b'), and the tension systems (6, 9) have a separate rating for starter operation and for generator operation, the tension system intended for generator operation being moved with lower prestress than the tension system intended for starter operation.

2. Traction drive according to Claim 1, **characterized in that** the second tension system (9) is produced at least partially according to the aluminium squeeze or rheo-casting method or from precision-cast steel.

3. Traction drive according to Claim 2, **characterized in that** at least one of the two tension systems (6) or (9) is prestressed and fixed by a cotter pin for mounting purposes, and **in that** at least the tension system (6) or (9) not fixed by a cotter pin has a corresponding tool receptacle which serves for tensioning the said tension system out of the belt drive.

4. Traction drive according to Claim 3, **characterized in that** the two tension systems (6), (9) have for generator operation and for starter operation a separate rating which is coordinated with the respective operating state.

## Revendications

1. Entraînement à élément de traction, notamment entraînement à courroie pour des groupes auxiliaires d'un moteur à combustion interne, comprenant une poulie à courroie (2) du vilebrequin KW et une poulie à courroie (4) d'un générateur-démarreur SG ainsi qu'un premier système de tension (6) qui présente un premier bras de levier tendeur (7) et un premier rouleau tendeur (8), ainsi qu'un deuxième système de tension (9), qui présente un deuxième bras de levier tendeur (10) et un deuxième rouleau tendeur (11), les bras de levier tendeurs (7, 10) des deux systèmes de tension (6, 9) pouvant pivoter par le biais d'axes de rotation positionnés séparément les uns des autres, et le premier rouleau tendeur (8) étant en contact de pression direct, avec un faible enveloppement, derrière la poulie à courroie (3) du compresseur de climatisation AC, avec un tronçon vide (13') dépendant du démarreur, et le deuxième rouleau tendeur (11) étant en contact de pression direct, avec un enveloppement d'environ 90°, derrière la poulie à courroie (2) du vilebrequin KW, avec un tronçon vide (14) dépendant de l'entraînement, et le tronçon vide (14) dépendant de l'entraînement fonctionnant, en mode de démarrage, en tant que tronçon de traction (14'), et une variation de position du deuxième rouleau tendeur (11) causée par ce changement de tronçon, étant limitée, **caractérisé en ce que** le deuxième système de tension (9) est disposé de telle sorte que le deuxième rouleau tendeur (11), dans le tronçon de traction (14') dépendant du démarreur, ne puisse être déplacé hors de l'entraînement à courroie sous l'effet de la force résultante des deux branches de tronçon de traction dépendant du démarreur (14a', 14b') que dans une mesure telle que le deuxième bras de levier tendeur (10) se trouve en une position quasiment de "point mort" presque parallèlement à la force résultante des deux branches de tronçon de traction dépendant du démarreur (14a', 14b') et que les systèmes de tension (6, 9) présentent une configuration séparée pour le mode de démarreur et le mode de générateur, le système de tension prévu pour le mode de générateur étant entraîné avec une précontrainte plus faible que le système de tension prévu pour le mode de démarreur.

2. Entraînement à élément de traction selon la revendication 1, **caractérisé en ce que** le deuxième système de tension (9) est fabriqué au moins en partie conformément au procédé de surpression d'aluminium ou de rhéomoulage ou par coulée de précision d'acier.

3. Entraînement à élément de traction selon la revendication 2, **caractérisé en ce qu'**au moins l'un des deux systèmes de tension (6) ou (9) est prétendu et goupillé pour le montage et **en ce qu'**au moins le système de tension non goupillé (6) ou (9) présente un logement d'outil correspondant qui sert au tensionnement de celui-ci hors de l'entraînement à courroie.

4. Entraînement à élément de traction selon la revendication 3, **caractérisé en ce que** les deux systèmes de tension (6), (9), présentent, pour le mode de démarreur et le mode de générateur, une configuration séparée adaptée au mode particulier.
